# EUROPÄISCHE PATENTSCHRIFT

(11) **EP 1 236 537 B1**
(45) Veröffentlichungstag und Bekanntmachung des Hinweises auf die Patenterteilung: **09.04.2008**
(21) Anmeldenummer: 02002677.9
(22) Anmeldetag: 06.02.2002
(51) Int. Cl.: B23Q 3/00, B27C 5/06, B27M 3/08

(54) **Verfahren zum Einstellen von wenigstens einem Andruckelement einer Maschine zum Bearbeiten von Werkstücken aus Holz, Kunststoff und dergleichen, Einstellvorrichtung zur Durchführung eines solchen Verfahrens sowie Andruckelement für ein solches Verfahren**
Method for adjusting at least one pressure-applying element for machines for working workpieces of wood, plastic or similar material, adjusting device for carrying out such a method and pressure-applying element for such a method
Procédé pour le réglage d'au moins un élément de pression d'une machine à travailler des pièces à usiner en bois, plastique ou similaires, dispositif de réglage pour la mise en oeuvre d'un tel procédé et élément de pression pour un tel procédé

(30) Priorität: 21.02.2001 DE 10108249
(43) Veröffentlichungstag der Anmeldung: 04.09.2002
(73) Patentinhaber: Michael Weinig Aktiengesellschaft, D-97941 Tauberbischofsheim (DE)
(72) Erfinder: Wagner, Ralf, 74736 Hardheim (DE); Reuter, Winfried, 97999 Igersheim (DE)
(74) Vertreter: Kohl, Karl-Heinz

(56) Entgegenhaltungen:
- DE-A- 2 617 617
- GB-A- 205 657
- US-A- 5 290 988
- US-A- 5 415 212

## Beschreibung

Die Erfindung betrifft ein Verfahren zum Einstellen von wenigstens einem Andruckelement einer Maschine zum Bearbeiten von Werkstücken aus Holz, Kunststoff oder dergleichen nach dem Oberbegriff des Anspruches 1, eine Einstellvorrichtung zur Durchführung eines solchen Verfahrens nach dem Oberbegriff des Anspruches 9 sowie ein Andruckelement für die Verwendung in einem solchen Verfahren nach dem Oberbegriff des Anspruches 19.

Bei Holzbearbeitungsmaschinen ist es bekannt, die Werkstücke bei ihrem Durchlauf durch die Maschine an ihren vier Seiten zu bearbeiten. Häufig wird die Oberseite der Werkstücke mit einem Profil versehen, wenn sie beispielsweise zur Herstellung von Möbelleisten eingesetzt werden sollen. Diese Profilherstellung erfolgt durch ein auf einer horizontalen Spindel sitzendes Werkzeug, das oberhalb der Transportbahn des Werkstückes durch die Maschine vorgesehen ist. Dieser oberen Spindel nachgeschaltet ist in der Regel eine untere Spindel, deren Werkzeug das Werkstück unmittelbar im Anschluß an die Oberseitenbearbeitung an der Unterseite bearbeitet. Damit das Werkstück während der Bearbeitung durch die Werkzeuge sauber auf der Transportbahn aufliegt, ist in Transportrichtung dieser Werkstücke unmittelbar hinter der oberen Spindel sowie im Bereich oberhalb der unteren Spindel ein Andruckelement angeordnet. Es ist als Platte ausgebildet, die eine ebene Auflageseite hat, mit der das Andruckelement auf das unter ihr sich hindurchbewegende Werkstück drückt. Ist die Oberseite der Werkstücke profiliert, ist die Anpressung des Werkstückes ungenügend, da das Andruckelement häufig nur über ein kurzes Stück oder eine Kante am Profilbereich des Werkstückes anliegt. Die Werkstücke können dadurch beim Durchlauf unterhalb dieses Andruckelementes kippen, wodurch die Bearbeitungsqualität und -genauigkeit beeinträchtigt wird.

Aus diesem Grunde ist es auch bekannt, die Andruckelemente an ihrer Auflageseite mit einem Gegenprofil für das abzustützende Werkstück zu versehen. Solche Andruckelemente müssen anhand eines Musterwerkstückes gefertigt und in die Maschine eingebaut und dort eingestellt werden. Dies ist jedoch aufwendig, teuer und mit erheblichem Zeitaufwand verbunden.

Es ist auch bekannt (DE 26 17 617 A1), das Andruckelement aus einzelnen, nebeneinander liegenden Lamellen zu bilden, die jeweils mit einem Langloch versehen sind, durch das sich eine Exzenterwelle erstreckt. Auf ihr sitzt eine Klemmvorrichtung, mit der die Lamellen gegeneinander verspannt werden können. Wird die Klemmvorrichtung gelockert und das Werkstück unterhalb des Andruckelementes angeordnet, dann werden die Lamellen je nach Profil des Werkstückes relativ gegeneinander verschoben. Anschließend werden sie mit der Klemmvorrichtung wieder fest gegeneinander gespannt. Da diese Verstellung innerhalb der Maschine stattfindet, ist sie umständlich und aufwendig.

Es ist schließlich bekannt (US-A-5 290 988), für jedes profilierte Werkstück ein geeignetes Druckstück anzufertigen, das an einer Adapterplatte festgeschraubt wird.

Der Erfindung liegt die Aufgabe zugrunde, das gattungsgemäße Verfahren, die gattungsgemäße Einstellvorrichtung und das gattungsgemäße Andruckelement so auszubilden, daß eine zuverlässige und problemlose Abstützung profilierter Werkstücke möglich ist.

Diese Aufgabe wird beim gattungsgemäßen Verfahren erfindungsgemäß mit den kennzeichnenden Merkmalen des Anspruches 1, bei der gattungsgemäßen Einstellvorrichtung erfindungsgemäß mit den kennzeichnenden Merkmalen des Anspruches 9 und beim gattungsgemäßen Andruckelement erfindungsgemäß mit den kennzeichnenden Merkmalen des Anspruches 19 gelöst.

Beim erfindungsgemäßen Verfahren wird das Andruckelement nicht mehrinnerhalb der Maschine, sondern außerhalb von ihr in der Einstellvorrichtung eingestellt. Hier läßt sich das Andruckelement problemlos in die genaue Abstützlage bringen. Nach dieser Einstellung wird das Andruckelement aus der Einstellvorrichtung herausgenommen und in die Maschine eingesetzt.

Die erfindungsgemäße Einstellvorrichtung ist mit einem Halter für die quer zur Längsrichtung des Andruckelementes relativ zum Halter in die Anschlagstellung verstellbaren Wechselkassette versehen. Die Anschlagstellung entspricht der Anschlagstellung der Wechselkassette in der Maschine. Dadurch kann das Andruckelement außerhalb der Maschine einfach und genau in die notwendige Lage eingestellt werden.

Das erfindungsgemäße Andruckelement ist wenigstens zweiteilig ausgebildet und hat den Grundkörper, an dem der Andruckkörper einstellbar gelagert ist. Da der Grundkörper und der Andruckkörper relativ zueinander beweglich sind, kann der Andruckkörper so gegenüber dem Grundkörper eingestellt werden, daß er auf dem zu bearbeitenden Werkstück einwandfrei aufliegt. In der Einstellage wird der Andruckkörper gegenüber dem Grundkörper fixiert. Die Feder sorgt dafür, daß der Andruckkörper einwandfrei gegenüber dem Grundkörper verstellt wird.

Weitere Merkmale der Erfindung ergeben sich aus den weiteren Ansprüchen, der Beschreibung und den Zeichnungen.

Die Erfindung wird anhand eines in den Zeichnungen dargestellten Ausführungsbeispieles näher erläutert. Es zeigen:
- Fig. 1: in Seitenansicht einen Teil einer Kehlmaschine mit einer erfindungsgemäßen Andruckeinrichtung,
- Fig. 2: in Seitenansicht eine erfindungsgemäße Einstellvorrichtung für die erfindungsgemäße Andruckeinrichtung in Seitenansicht,
- Fig. 3: die Einstellvorrichtung gemäß Fig. 2 in Stirnansicht,
- Fig. 4: in einem Schnitt die erfindungsgemäße Andruckeinrichtung,
- Fig. 5a bis Fig. 5c: jeweils in Seitenansicht unterschiedliche Ausführungsformen von erfindungsgemäßen Andruckelementen,
- Fig. 6: einen Querschnitt durch das erfindungsgemäße Andruckelement.

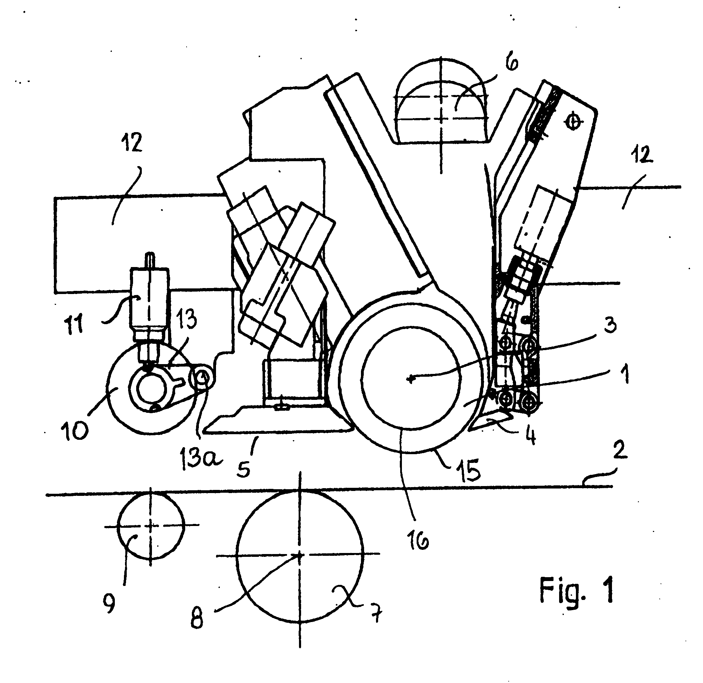

Fig. 1 zeigt einen Teil einer Kehlmaschine, auf der Werkstücke, vorzugsweise aus Holz, bei ihrem Durchlauf durch die Maschine an vier Seiten bearbeitet werden. Eine solche Kehlmaschine ist bekannt und wird darum nur kurz erläutert. Sie hat eine Transportbahn 2, auf welcher die zu bearbeitenden Werkstücke aufliegend durch die Kehlmaschine mit Vorschubrollen transportiert werden. Bei ihrem Durchlauf durch die Kehlmaschine werden diese Werkstücke zunächst mit einem auf einer horizontalen, unterhalb der Transportbahn befindlichen Spindel sitzenden Werkzeug an ihrer Unterseite bearbeitet, beispielsweise gehobelt. Bei ihrem weiteren Durchlauf durch die Kehlmaschine werden die Werkstücke an ihren beiden Längsseiten mit Werkzeugen bearbeitet, die auf einer rechts und einer links neben der Transportbahn befindlichen vertikalen Spindel sitzen. Im weiteren Transport durch die Kehlmaschine gelangen die Werkstücke in den Arbeitsbereich eines Werkzeuges 1 (Fig. 1), das auf einer horizontalen, im Bereich oberhalb der Transportbahn 2 befindlichen Spindel 3 drehfest sitzt. In Transportrichtung vor und hinter dem Werkzeug 1 befindet sich jeweils eine Andruckeinrichtung 4 und 5. Die Andruckeinrichtung 4 vor dem Werkzeug 1 ist in bekannter Weise ein Andruckschuh, der unter Federkraft auf der Oberseite des Werkstückes aufliegt und es sauber auf die Transportbahn 2 drückt. Dadurch ist sichergestellt, daß das zu bearbeitende Werkstück einwandfrei dem Werkzeug 1 zugeführt werden kann, mit dem die Oberseite des Werkstückes bearbeitet wird. Die Andruckeinrichtung 4 kann in bekannter Weise relativ zum Flugkreis des Werkzeuges 1 eingestellt werden.

Auch die in Transportrichtung hinter dem Werkzeug 1 vorgesehene Andruckeinrichtung 5 kann relativ zum Flugkreis des Werkzeuges 1 in bekannter Weise eingestellt werden. Das Werkzeug 1 mit der Spindel 3 und den Andruckeinrichtungen 4, 5 kann zur Anpassung an unterschiedliche Werkstückdicken senkrecht zur Transportbahn 2 in bekannter Weise verstellt werden. Die bei der Bearbeitung des Werkstückes durch das Werkzeug 1 anfallenden Späne werden durch eine Absaughaube 6 in bekannter Weise abgesaugt.

Die Andruckeinrichtung 5 befindet sich im Bereich oberhalb eines Werkzeuges 7, das auf einer horizontalen, unterhalb der Transportbahn 1 vorgesehenen Spindel 8 drehfest sitzt und mit dem das Werkstück an der Unterseite bearbeitet wird. Die Andruckeinrichtung 5 stellt hierbei sicher, daß das Werkstück während dieser Bearbeitung sauber gegen die Transportbahn 2 gedrückt wird.

In Transportrichtung der Werkstücke hinter der Spindel 8 befindet sich eine Tischwalze 9, die auf einer horizontalen, im Bereich unterhalb der Transportbahn 2 angeordneten Achse sitzt.

Fig. 1 zeigt noch eine Transportwalze 10, die mit einem Andruckzylinder 11 in bekannter Weise auf das Werkstück gedrückt wird. Der Andruckzylinder 11 ragt nach unten von einem Vorschubbalken 12, der sich in bekannter Weise mit Abstand oberhalb der Spindel 3 in Transportrichtung durch die Kehlmaschine erstreckt. An ihm sind auch im Bereich vor der Spindel 3 entsprechende Transportwalzen 10 vorgesehen. Sie wird in einem Pendelgehäuse 13 gelagert, das schwenkbar an einem Pendellager 13a angeordnet ist. Es ist am Vorschubbalken 12 vorgesehen oder fester Bestandteil von ihm.

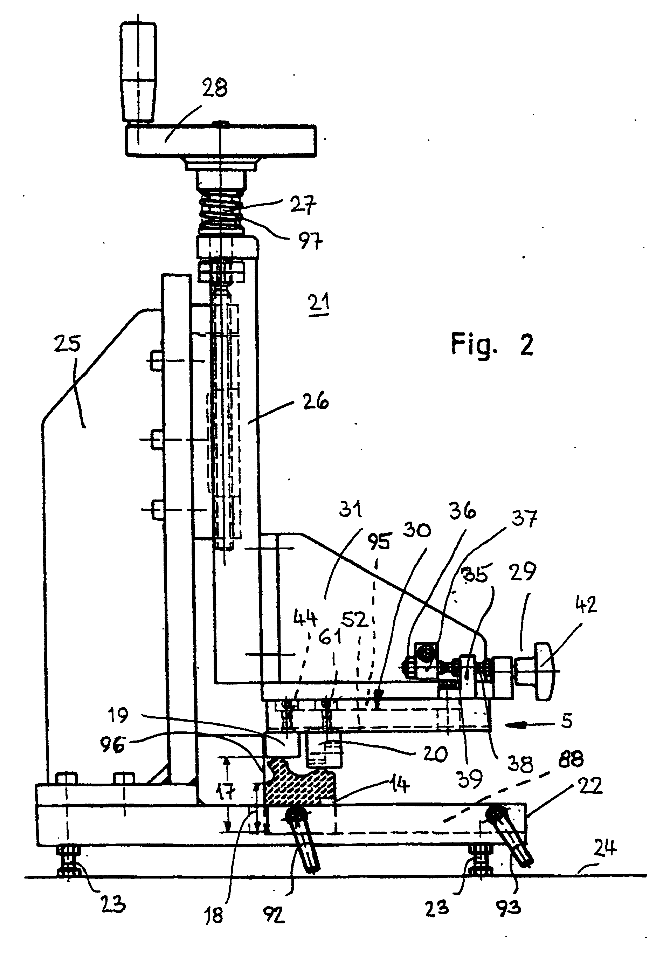

Häufig werden die Werkstücke zumindest an ihrer Oberseite durch das Werkzeug 1 mit einem entsprechenden Profil versehen. Fig. 2 zeigt beispielhaft eine Schablone 14 eines derartigen Werkstückes, dessen Oberseite profiliert ist. Die Schneidmesser des Werkzeuges 1 sind an ihrer Schneide mit einem entsprechenden Profil versehen. Fig. 1 zeigt für ein solches profiliertes Schneidmesser den maximalen Flugkreis 15 und den minimalen Flugkreis 16. Der kleinste Flugkreis 16 entspricht der größten Dicke 17 (Fig. 2) des Werkstückes, während der maximale Flugkreis 15 der kleinsten Dicke 18 des Werkstückes entspricht. Dementsprechend bestimmt die Differenz aus größtem und kleinstem Flugkreis 15, 16 die maximale Tiefe des Profils des Werkstückes, die sogenannte Kehltiefe. Aufgrund der Oberseitenprofilierung, wie sie beispielhaft in Fig. 2 dargestellt ist, hat die Andruckeinrichtung 5 im Ausführungsbeispiel zwei unterschiedlich hohe Andruckleisten 19, 20. Sie drücken das Werkstück an der profilierten Oberseite auf die Transportbahn 2, so daß das Werkstück zuverlässig geführt wird und von dem auf der unteren Spindel 8 sitzenden Werkzeug 7 bei seinem Durchlauf durch die Kehlmaschine genau bearbeitet werden kann.

Fig. 2 zeigt eine Einstellvorrichtung 21, mit der außerhalb der Maschine die Andruckleisten 19, 20 auf das Profil des Werkstückes eingestellt werden können. Die Einstellvorrichtung 21 hat ein Grundgestell 22, das mit höhenverstellbaren Füßen 23 auf einer Unterlage 24, zum Beispiel einer Werkbank oder einem Tisch, steht. Vom Grundgestell 22 steht senkrecht ein Ständer 25 ab, längs dessen Vorderseite ein Schlitten 26 mit einer Spindel 27, die am freien Ende mit einer Handhabe 28 versehen ist, in Höhenrichtung verstellt werden kann. Von der Stirnseite des Schlittens 26 steht nahe dem unteren Ende ein Träger 31 senkrecht ab, der mit einer senkrecht zur Verschieberichtung 32 des Schlittens 26 sich erstreckenden Paßfeder 33 versehen ist. Sie greift in eine entsprechende Paßnut 34 am oberen Längsrand einer Andruckplatte 30 ein. Am Träger 31 ist eine Schnellklemmeinrichtung 29 vorgesehen, mit der die Andruckplatte 30 am Schlitten 26 festgeklemmt werden kann.

Auf der Andruckplatte 30 sitzt ein Anschlag 35, mit dem die Position der Andruckplatte 30 und damit der Andruckleisten 19, 20 senkrecht zur Transportrichtung des Werkstückes durch die Maschine bestimmt werden kann. Der Anschlag 35 wird im Ausführungsbeispiel durch ein L-förmiges Winkelstück gebildet, das mit seinem einen Schenkel auf der Andruckplatte 30 befestigt ist. Am Träger 31 ist seitlich als Gegenanschlag eine Einstellschraube 36 vorgesehen, die durch eine Gewindeaufnahme 37 ragt, die an einer Seitenwand des plattenförmigen Trägers 31 befestigt ist. Am vertikalen Schenkel des Anschlages 35 ist ein Anschlagelement 38 vorgesehen, das vorzugsweise durch eine Einstellschraube gebildet ist. Sie ist in eine Gewindebohrung im vertikalen Schenkel des Anschlages 35 geschraubt und in der jeweils eingestellten Lage durch eine Kontermutter 39 gesichert. Die Andruckplatte 30 wird so weit auf den Träger 31 aufgeschoben, bis das Anschlagelement 38 am trägerseitigen Gegenanschlag 36 zur Anlage kommt (Fig. 2). Dadurch lassen sich die beiden Andruckleisten 19, 20 genau in ihre Lage bezüglich des Werkstückes 14 bringen. Da der Gegenanschlag 36 und das Anschlagelement 38 jeweils durch Einstellschrauben gebildet sind, kann die Lage der Andruckleisten 19, 20 quer zur Transportrichtung der Werkstücke durch die Maschine stufenlos und feinfühlig eingestellt werden.

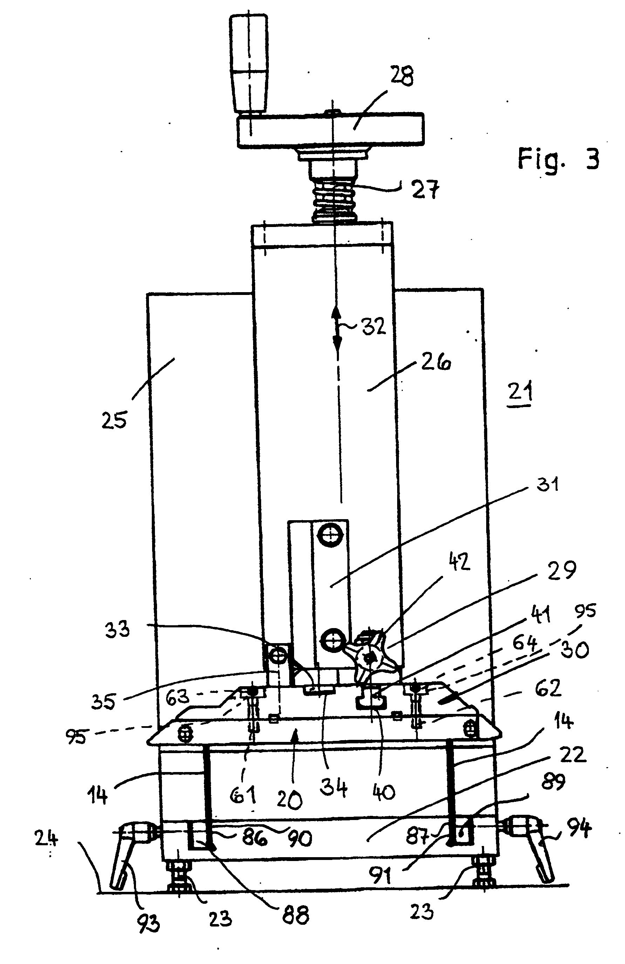

Die Andruckplatte 30 ist, wie Fig. 3 zeigt, an ihrer Oberseite mit einer T-Nut 40 versehen, in die als Halter ein T-Nutenstein 41 eingreift. Die Andruckplatte 30 mit den beiden Andruckleisten 19, 20 wird auf den Nutenstein 41 geschoben, wobei gleichzeitig die Paßfeder 33 in die Paßnut 34 der Andruckplatte 30 eingreift. Sobald die Andruckplatte 30 ihre durch die Anschläge 36, 38 bestimmte Lage erreicht hat, wird durch Drehen eines Drehgriffes 42 der Schnellklemmeinrichtung 29 die Andruckplatte 30 mittels des Nutensteines 41 in der Einstellvorrichtung 21 verklemmt.

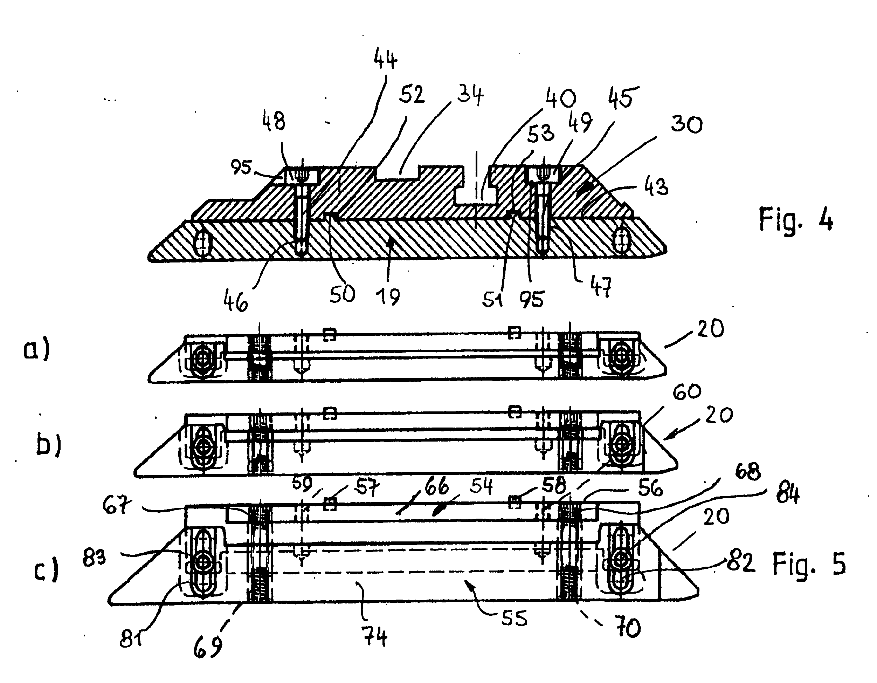

Die Andruckleiste 19 (Fig. 2 und 4) ist an die Unterseite 43 der Andruckplatte 30 geschraubt. Hierzu sind zwei mit Abstand voneinander liegende Befestigungsschrauben 44, 45 vorgesehen, die von der Oberseite der Andruckplatte 30 aus in Gewindebohrungen 46, 47 in der Andruckleiste 19 geschraubt werden. Die Köpfe 48, 49 der Befestigungsschrauben 44, 45 liegen vorteilhaft versenkt in Nuten 95 in der Andruckplatte 30, die sich über den größten Teil der Länge der Andruckplatte 30 erstrecken (Fig. 2 und 3) und an deren Oberseite vorgesehen sind. Im Boden der Nuten 95 befinden sich in Längsrichtung der Nuten sich erstreckende Langlöcher für den Durchtritt der Befestigungsschrauben 44, 45. Die Befestigungsschrauben 44, 45 liegen im Bereich neben der Paßnut 34 bzw. der T-Nut 40. Die Andruckleiste 19 ist an ihrem der Andruckplatte 30 zugewandten Rand mit zwei mit Abstand voneinander liegenden Federn 50, 51 versehen, die in Nuten 52, 53 in der Unterseite der Andruckplatte 30 eingreifen. Die Federn 50, 51 bzw. die Nuten 52, 53 erstrecken sich parallel zur Paßnut 34 bzw. zur T-Nut 40.

Die Andruckleiste 19 ist über die Schrauben 44, 45 starr mit der Andruckplatte 30 verbunden. Mit der Andruckleiste 19 liegt die Andruckeinrichtung 5 auf dem am weitesten über die Transportbahn 2 überstehenden Profilabschnitt des Werkstückes auf.

Die andere Andruckleiste 20 ist in begrenztem Maße höheneinstellbar, so daß sie an das jeweilige Profil an der Oberseite des Werkstückes angepaßt werden kann. In den Fig. 5a bis 5c sind drei unterschiedliche Andruckleisten 20 dargestellt, die sich lediglich durch ihre Höhe unterscheiden. Die Andruckleiste 20 gemäß Fig. 5 ist beispielhaft für Profiltiefen am Werkstück zwischen 0 und 5,5 mm vorgesehen. Liegt die Profiltiefe am Werkstück beispielhaft zwischen 5,5 und 15,5 mm, wird die etwas dickere Andruckleiste 20 gemäß Fig. 5b eingesetzt. Für größere Profiltiefen, im Ausführungsbeispiel zwischen 15,5 und 35 mm, wird die Andruckleiste 20 gemäß Fig. 5c herangezogen. Abgesehen von ihrer unterschiedlichen Höhe sind die Andruckleisten 20 gemäß den Fig. 5a bis 5c jedoch gleich ausgebildet.

Die Andruckleiste 20 besteht aus zwei Leistenelementen 54 und 55, die begrenzt gegeneinander verstellt werden können. Das Leistenelement 54 weist an seiner Oberseite 56 zwei mit Abstand voneinander liegende Federn 57, 58 auf, die in die Nuten 52, 53 an der Unterseite der Andruckplatte 30 eingreifen. Diese Nuten 52, 53 erstrecken sich über die gesamte Länge der Andruckplatte 30. Das obere Leistenelement 54 hat zwei als Sacklochbohrungen ausgebildete Gewindebohrungen 59, 60, in die Befestigungsschrauben 61, 62 (Fig. 2 und 3) von der Oberseite der Andruckplatte 30 aus geschraubt werden. Die Köpfe 63, 64 dieser Schrauben liegen ebenfalls vertieft in der Oberseite der Andruckplatte 30.

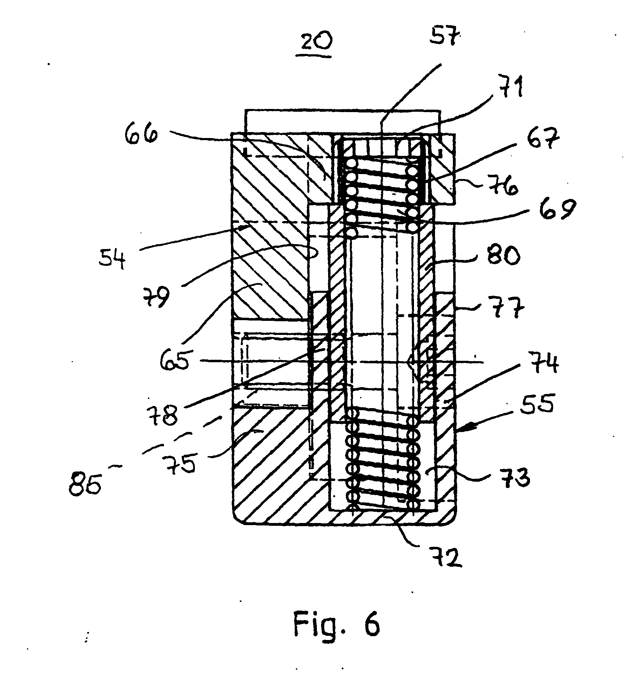

Wie sich aus Fig. 6 ergibt, hat das Leistenelement 54 L-förmigen Querschnitt. Der eine Schenkel 65 bildet die Rückwand der Andruckleiste 20, während der andere Schenkel 66 den oberen Abschluß der Andruckleiste 20 bildet. An diesem oberen horizontalen Schenkel 66 sind die Federn 57, 58 vorgesehen. Die Länge der Federn 57, 58 ist geringfügig kleiner als die Breite des Schenkels 66. Dieser Schenkel 66 weist nahe seinen beiden Enden (Fig. 5c) zwei Öffnungen 67, 68 auf, durch die jeweils wenigstens eine Schraubendruckfeder 69, 70 gesteckt werden kann, mit denen die beiden Leistenelemente 54, 55 gegeneinander vorgespannt sind. In die Öffnungen 67, 68 kann ein Abschluß 71 (Fig. 6) eingesetzt werden, an dem sich das obere Ende der entsprechenden Schraubendruckfeder 69, 70 abstützt. Der Abschluß 71 kann schraubbar sein, so daß durch unterschiedlich weites Einschrauben dieses Abschlusses 71 die Vorspannung der Federn 69, 70 eingestellt werden kann.

Das untere Ende der Druckfeder 69, 70 stützt sich am Boden 72 einer Vertiefung 73 im Leistenelement 55 ab. Die lichte Weite der Vertiefung 73 ist größer als der Durchmesser der Druckfeder 69, 70.

Das Leistenelement 55 bildet einen Andruckkörper und ist im Querschnitt L-förmig ausgebildet. Der eine Schenkel bildet die Vorderwand 74 der Andruckleiste 20, während der andere Schenkel 75 in gleicher Ebene wie die Rückwand 65 des Leistenelementes 54 liegt. Die Stirnseite 76 des Schenkels 66 des Leistenelementes 54 und die Vorderseite 77 der Vorderwand 74 des Leistenelementes 55 liegen in einer gemeinsamen Ebene. Auch die Außenseiten der Schenkel 65 und 75 der Leistenelemente 54, 55 liegen in einer gemeinsamen Ebene und parallel zur Stirnseite 76 bzw. Vorderseite 77 der beiden Leistenelemente 54, 55.

Der Schenkel 75 des Leistenelementes 55 hat einen in Richtung auf den Schenkel 66 des Leistenelementes 55 vorstehenden Führungsteil 78, mit dem das Leistenelement 55 an der der Vorderwand 74 des Leistenelementes 55 zugewandten Vorderseite 79 der Rückwand 65 des Leistenelementes 54 geführt ist.

Die beiden Druckfedern 69, 70 sind im Bereich zwischen dem Schenkel 66 des Leistenelementes 54 und dem Schenkel 74 des Leistenelementes 55 jeweils in einer Hülse 80 aufgenommen, welche die Druckfedern führt und gegen Verschmutzung und/oder Beschädigung schützt. Die Hülsen 80 liegen an der Unterseite des Schenkels 66 des Leistenelementes 54 an und ragen bis in die Vertiefungen 73 des Leistenelementes 55.

Wie Fig. 5c zeigt, ist das Leistenelement 55 nahe seinen beiden Enden mit jeweils einem senkrecht zu seiner Längsrichtung sich erstreckenden Schlitz 81, 82 versehen, durch welche jeweils eine Klemmschraube 83, 84 ragt, die in Gewindebohrungen 85 in der Rückwand 65 des Leistenelementes 54 geschraubt werden. Die Schlitze 81, 82 liegen vorteilhaft so vertieft in der Vorderwand 74 des Leistenelementes 55, daß die Köpfe der Klemmschrauben 83, 84 nicht über die Vorderseite 77 des Leistenelementes 55 überstehen.

Die Andruckleiste 20 wird mit den Schrauben 61, 62 an der Unterseite der Andruckplatte 30 im Bereich neben der Andruckleiste 19 befestigt. Die beiden Klemmschrauben 83, 84 werden gelockert, so daß die Druckfedern 69, 70 das Leistenelement 55 nach unten in Richtung auf die Schablonen 14 so weit verschieben, bis dieses Leistenelement 55 an ihnen anliegt. Dann werden die beiden Klemmschrauben 83, 84 angezogen, so daß die beiden Leistenelemente 54, 55 eine starre Einheit bilden. Entsprechend der Länge der Schlitze 81, 82 kann das Leistenelement 55 gegenüber dem Leistenelement 54 senkrecht zur Transportrichtung der Werkstücke durch die Maschine eingestellt werden. Je nach Profiltiefe an der Oberseite der Schablonen 14 werden die in den Fig. 5a bis 5c dargestellten, unterschiedlich hohen Andruckleisten 20 an der Andruckplatte 30 befestigt.

In der Einstellvorrichtung 21 werden zur Ausrichtung der beiden Andruckleisten 19, 20 zwei Profilschablonen 14 oder entsprechende Werkstückmuster eingespannt (Fig. 2 und 3). Das Grundgestell 22 ist zur Aufnahme der beiden Schablonen 14 mit Vertiefungen 86, 87 versehen, in welche die Schablonen 14 senkrecht gestellt werden. Sie werden zur Anlage an einem vorrichtungsseitigen Anschlag 96 (Fig. 2) gebracht, um eine definierte Stellung der Schablonen 14 zu erreichen, die der Stellung des Werkstückes in der Maschine entspricht. In den Vertiefungen 86, 87 werden die Schablonen 14 mit jeweils wenigstens einem Klemmelement 88, 89 gegen die jeweilige Seitenwand 90, 91 der Vertiefungen 86, 87 gedrückt. Zur Betätigung der Klemmelemente 88, 89 sind entsprechende Schnellklemmeinrichtungen 92 bis 94 vorgesehen. Mit ihnen lassen sich die Klemmelemente 88, 89 einfach und schnell klemmen bzw. lösen. Die Vertiefungen 86, 87 erstrecken sich senkrecht zu den Andruckleisten 19, 20 bis zur Stirnseite des Grundgestelles 22 (Fig. 2 und 3). Dementsprechend erstrecken sich die Klemmelemente 88, 89 vorteilhaft über die gesamte Länge der Vertiefungen 86, 87.

Die Schablonen 14 werden wie Schablonen für die Werkzeuge hergestellt, beispielsweise aus CAD-Zeichnungen für das Werkstück oder für das zum Profilieren zu verwendende Werkzeug. Die profilierte Oberseite dieser Profilschablonen 14 entspricht dem herzustellenden Profil an der Oberseite des Werkstückes.

Um in der Maschine ein zu bearbeitendes Werkstück an der profilierten Oberseite optimal abstützen zu können, wird zunächst in der beschriebenen Weise die diesem Werkstück entsprechende Schablone 14, ein Muster hiervon oder dergleichen erstellt. Zwei gleiche Schablonen 14 werden in der Einstellvorrichtung 21 eingespannt, wobei sie in den Vertiefungen 86, 87 des Grundgestelles 22 bis zum Anschlag 96 verschoben werden. Dann werden die beiden Schablonen 14 mit den Schnellklemmeinrichtungen 92 bis 94 festgeklemmt. Der Anschlag 96 für die Schablonen 14 entspricht in seiner Lage dem entsprechenden Anschlag in der Maschine für das zu bearbeitende Werkstück. Anschließend wird die Andruckleiste 19 in der beschriebenen Weise an der Unterseite der Andruckplatte 30 befestigt. Wie Fig. 2 beispielhaft zeigt, wird diese Andruckleiste 19 an der höchsten Stelle des Profils der Schablonen 14 angeordnet. Je nach Lage dieser höchsten Stelle des Profils wird die Andruckleiste 19 an der entsprechenden Stelle an der Andruckplatte 30 in der beschriebenen Weise befestigt. Da die Andruckplatte 30 an ihrer Oberseite die Nuten 95 und im Boden dieser Nuten die Langlöcher für die Befestigungsschrauben 44, 45 aufweist, kann die Andruckleiste 19 genau bezüglich der höchsten Stelle des Profils der Schablonen 14 positioniert werden. Dieser Verstellrichtung der Andruckleisten 19, 20 entspricht in der Maschine die Achsrichtung der das entsprechende Werkzeug tragenden Spindel 3. In gleicher Weise wird die Andruckleiste 20 an einer anderen Stelle des Profils der Schablonen 14 an der Unterseite der Andruckplatte 30 positioniert und festgeklemmt. Vorteilhaft erfolgt die Positionierung und Klemmung der Andruckleisten 19, 20 an der Andruckplatte 30 dann, wenn diese mittels der Gewindespindel 27 und dem Schlitten 26 hochgefahren ist. Dann lassen sich die Andruckleisten 19, 20 ohne Schwierigkeiten an der Unterseite der Andruckplatte 30 befestigen. Anschließend wird der Schlitten 26 durch Betätigen der Handhabe 28 so weit abgesenkt, bis die Andruckleiste 19 auf der höchsten Profilstelle der Schablonen 14 aufliegt. Die Gewindespindel 27 ist im Bereich zwischen dem Schlitten 26 und der Handhabe 28 von einer Schraubendruckfeder 97 umgeben. Sie sorgt dafür, daß beim Verschieben des Schlittens 26 die Andruckleiste 19 auf die Schablonen 14 sauber auftrifft und eine Beschädigung der Schablonen 14 durch die Andruckleiste 19 vermieden wird.

In der Grundstellung liegen die beiden Leistenelemente 54, 55 so zueinander, daß die Andruckleiste 20 ihre geringste Dicke hat. Die Klemmschrauben 83, 84 der Andruckleiste 20 werden dann gelockert, so daß die Druckfedern 69, 70 das Leistenelement 55 so weit in Richtung auf die Schablonen 14 bewegen, bis es an ihnen anliegt (Fig. 2). Dann werden die Klemmschrauben 83, 84 angezogen, um die beiden Leistenelemente 54, 55 der Andruckleiste 20 zu einer starren Einheit zu verbinden.

Je nach Ausbildung des Profils der Schablonen 14 können auch weitere Andruckleisten 20 vorgesehen sein, die in der beschriebenen Weise an der Unterseite der Andruckplatte 30 befestigt werden und ebenfalls aus zwei gegeneinander beweglichen Leistenelementen 54, 55 bestehen. Es ist ferner möglich, die Lage der Leistenelemente 19, 20 zu tauschen, wenn die höchste Stelle des Profils der Schablonen 14 auf der anderen Seite vorgesehen ist.

Die Andruckplatte 30 mit den eingestellten Andruckleisten 19, 20 bildet eine auswechselbare Kassette, die nach Lösen der Schnellklemmeinrichtung 29 der Einstellvorrichtung 21 entnommen und in die Maschine eingesetzt wird, die eine gleiche Schnellklemmeinrichtung aufweist. Die Anschlagstellung der Andruckplatte 30 mittels der Anschläge 36, 38 in der Einstellvorrichtung 21 entspricht den Verhältnissen in der Maschine. Darum muß nach dem Einrichten die Andruckplatte 30 mit den Andruckleisten 19, 20 nur so weit in die Maschine eingeschoben werden, bis die Andruckplatte 30 ihre Anschlagstellung einnimmt. Dann haben die Andruckleisten 19, 20 in bezug auf das unter ihnen durchlaufende, zu bearbeitende Werkstück die genaue Lage.

Die beiden Andruckeinrichtungen 4, 5 (Fig. 1) in der Maschine werden in bekannter Weise in bezug auf das auf der Spindel 3 sitzende Werkzeug unter Berücksichtigung des kleinsten Flugkreisdurchmessers 16 des Werkzeuges und auf die Kehltiefe der profilierten Schneidmesser dieses Werkzeuges eingestellt. Die Andruckplatte 30 und die Andruckleiste 19 bilden hierbei den Bezugspunkt bei dieser Einstellung.

Die beschriebene Andruckeinrichtung 5 in Form einer Wechselkassette wird zum schnellen und einfachen Rüsten der Maschine eingesetzt. Diese Wechselkassette wird außerhalb der Maschine auf der Einstellvorrichtung 21 in der beschriebenen Weise eingerichtet. Eine derartige Wechselkassette kann auch für den Andruck nach der linken Spindel und/oder für die Andrucke vor der oberen oder linken Spindel der Maschine eingesetzt werden.

## Patentansprüche

1. Verfahren zum Einstellen von wenigstens einem Andruckelement (19, 20) einer Maschine zum Bearbeiten von Werkstücken aus Holz, Kunststoff und dergleichen in bezug auf das durch die Maschine zu transportierende und in der Maschine zu bearbeitende Werkstück,
**dadurch gekennzeichnet, daß** das Andruckelement (19, 20) außerhalb der Maschine in einer Einstellvorrichtung (21) relativ zu dem Profil der dem Andruckelement (19, 20) zugewandten Seite des herzustellenden Werkstückes eingestellt und nach dem Einstellvorgang in die Maschine eingesetzt wird.

2. Verfahren nach Anspruch 1,
**dadurch gekennzeichnet, daß** das Andruckelement (19, 20) relativ zu wenigstens einer Schablone (14), einem Muster und dergleichen eingestellt wird, das zumindest an seiner dem Andruckelement (19, 20) zugewandten Seite dem Profil der entsprechenden Seite des herzustellenden Werkstückes entspricht.

3. Verfahren nach Anspruch 2,
**dadurch gekennzeichnet, daß** in die Einstellvorrichtung (21) zwei mit Abstand hintereinander und deckungsgleich zueinander liegende Schablonen (14) eingesetzt werden.

4. Verfahren nach Anspruch 3,
**dadurch gekennzeichnet, daß** das Andruckelement (19, 20) quer zu einer die beiden Schablonen (14) verbindenden Geraden eingestellt wird.

5. Verfahren nach einem der Ansprüche 1 bis 4,
**dadurch gekennzeichnet, daß** das Andruckelement (19, 20) in der Einstellvorrichtung (21) quer zu seiner Längsrichtung in eine Anschlagstellung gebracht wird, die der Anschlagstellung in der Maschine entspricht.

6. Verfahren nach einem der Ansprüche 1 bis 5,
**dadurch gekennzeichnet, daß** das Andruckelement (19, 20) außerhalb der Maschine in der Einstellvorrichtung (21) an wenigstens einer Andruckplatte (30) eingestellt wird, die nach dem Einstellvorgang zusammen mit dem Andruckelement in die Maschine eingesetzt wird.

7. Verfahren nach Anspruch 6,
**dadurch gekennzeichnet, daß** die Andruckplatte (30) in der Einstellvorrichtung (21) in eine Anschlagstellung gebracht wird, die der Anschlagstellung der Andruckplatte (30) in der Maschine entspricht.

8. Verfahren nach Anspruch 6 oder 7,
**dadurch gekennzeichnet, daß** das Andruckelement (19, 20) quer zu seiner Längsrichtung an der Andruckplatte (30) eingestellt wird.

9. Einstellvorrichtung mit wenigstens einem Halter (41) für wenigstens eine Wechselkassette (19, 20, 30), die wenigstens eine Andruckplatte (30) aufweist, an der das einstellbare Andruckelement (19, 20) vorgesehen ist,
**dadurch gekennzeichnet, daß** die Einstellvorrichtung zur Durchführung des Verfahrens nach einem der Ansprüche 1 bis 8 geeignet ist und die Wechselkassette (19, 20, 30) quer zur Längsrichtung und quer zur Höhe des Andruckelementes (19, 20) relativ zum Halter (41) in eine Anschlagstellung einstellbar ist, die der Anschlagstellung der Wechselkassette (19, 20, 30) quer zur Transportrichtung der Werkstücke in der Maschine entspricht.

10. Einstellvorrichtung nach Anspruch 9,
**dadurch gekennzeichnet, daß** die Andruckplatte (30) wenigstens einen Anschlag (35) aufweist, dem an der Einstellvorrichtung (21) ein Gegenanschlag (36) zugeordnet ist.

11. Einstellvorrichtung nach Anspruch 10,
**dadurch gekennzeichnet, daß** die Lage zumindest des Anschlages (35), vorzugsweise auch des vorteilhaft als Einstellschraube ausgebildeten Gegenanschlages (36) einstellbar, vorzugsweise stufenlos einstellbar ist.

12. Einstellvorrichtung nach Anspruch 10 oder 11,
**dadurch gekennzeichnet, daß** der Anschlag (35) ein auf der Andruckplatte (30) vorgesehenes Winkelstück ist, an dem vorteilhaft eine Stellschraube (38) als Anschlagelement gelagert ist.

13. Einstellvorrichtung nach einem der Ansprüche 9 bis 12,
**dadurch gekennzeichnet, daß** der Halter (41) ein Formschlußelement, vorzugsweise ein T-Nutenstein, ist, der in eine Aufnahme (40) der vorteilhaft mittels des Halters (41) festklemmbaren Andruckplatte (30) eingreift.

14. Einstellvorrichtung nach einem der Ansprüche 9 bis 13,
**dadurch gekennzeichnet, daß** die Andruckplatte (30) an ihrer Unterseite wenigstens ein vorteilhaft lösbar mit ihm verbundenes Andruckelement (19, 20) aufweist.

15. Einstellvorrichtung nach einem der Ansprüche 9 bis 14,
**dadurch gekennzeichnet, daß** an der Andruckplatte (30) wenigstens zwei unterschiedliche Andruckelemente (19, 20) vorgesehen sind.

16. Einstellvorrichtung nach einem der Ansprüche 9 bis 15,
**dadurch gekennzeichnet, daß** das Andruckelement (19, 20) quer zu seiner Längsrichtung an der Andruckplatte (30) einstellbar ist.

17. Einstellvorrichtung nach Anspruch 15 oder 16,
**dadurch gekennzeichnet, daß** das eine Andruckelement (19) starr ausgebildet ist und fest mit der Andruckplatte (30) verbunden wird.

18. Einstellvorrichtung nach einem der Ansprüche 15 bis 17,
**dadurch gekennzeichnet, daß** das andere Andruckelement (20) aus wenigstens zwei Teilen besteht, von denen das eine Teil (54) fest mit der Andruckplatte (30) verbunden und das andere Teil (55) relativ zum einen Teil (54) verstellbar ist.

19. Andruckelement zur Verwendung in einem Verfahren nach einem der Ansprüche 1 bis 8, mit einem leistenförmigen Grundkörper (54), an dem wenigstens ein Andruckkörper (55) einstellbar gelagert ist, der in der jeweiligen Einstellage gegenüber dem Grundkörper (54) fixierbar ist,
**dadurch gekennzeichnet, daß** der Grundkörper (54) und der Andruckkörper (15) durch wenigstens eine Feder (69, 70) gegeneinander vorgespannt sind.

20. Andruckelement nach Anspruch 19,
**dadurch gekennzeichnet, daß** die Feder (69, 70) innerhalb des Grundkörpers (54) und/oder des Andruckkörpers (55) angeordnet ist.

21. Andruckelement nach Anspruch 19 oder 20,
**dadurch gekennzeichnet, daß** die Feder (69, 70) wenigstens über einen Teil ihrer Länge in einer Hülse (80) liegt.

22. Andruckelement nach einem der Ansprüche 19 bis 21,
**dadurch gekennzeichnet, daß** der Grundkörper (54) und der Andruckkörper (55) gegeneinander verklemmbar sind.

23. Andruckelement nach Anspruch 22,
**dadurch gekennzeichnet, daß** in den Grundkörper (54) wenigstens eine Klemmschraube (83, 84) schraubbar ist, die durch ein Langloch (81, 82) im Andruckkörper (55) ragt und mit ihrem Kopf gegen den Andruckkörper (55) gezogen ist.

24. Andruckelement nach Anspruch 23,
**dadurch gekennzeichnet, daß** die Länge des Langloches (81, 82) den Einstellweg des Andruckkörpers (55) gegenüber dem Grundkörper (54) begrenzt.

## Claims

1. A method for adjusting at least one pressing element (19, 20) of a machine for machining workpieces of wood, plastics material and the like in relation to the workpiece to be transported through the machine and to be machined in the machine,
**characterised in that** the pressing element (19, 20) is adjusted outside the machine in an adjusting device (21) relative to the profile of the side of the workpiece to be produced directed towards the pressing element (19, 20) and is inserted into the machine after the adjusting operation.

2. A method according to Claim 1,
**characterised in that** the pressing element (19, 20) is adjusted relative to at least one template (14), a sample and the like, which at least on its side directed towards the pressing element (19, 20) corresponds to the profile of the corresponding side of the workpiece to be produced.

3. A method according to Claim 2,
**characterised in that** two templates (14) located so as to be spaced apart one after the other and congruent to one another are inserted into the adjusting device (21).

4. A method according to Claim 3,
**characterised in that** the pressing element (19, 20) is adjusted transversely to a straight line connecting the two templates (14).

5. A method according to one of Claims 1 to 4,
**characterised in that** the pressing element (19, 20) in the adjusting device (21) is moved transversely to its longitudinal direction into a stop position which corresponds to the stop position in the machine.

6. A method according to one of Claims 1 to 5,
**characterised in that** the pressing element (19, 20) is adjusted outside the machine in the adjusting device (21) on at least one pressing plate (30) which is inserted into the machine together with the pressing element after the adjusting operation.

7. A method according to Claim 6,
**characterised in that** the pressing plate (30) in the adjusting device (21) is moved into a stop position which corresponds to the stop position of the pressing plate (30) in the machine.

8. A method according to Claim 6 or 7,
**characterised in that** the pressing element (19, 20) is adjusted transversely to its longitudinal direction on the pressing plate (30).

9. An adjusting device comprising at least one holder (41) for at least one interchangeable cassette (19, 20, 30) which has at least one pressing plate (30) on which the adjustable pressing element (19, 20) is provided,
**characterised in that** the adjusting device is suitable for implementing the method according to one of Claims 1 to 8, and the interchangeable cassette (19, 20, 30) is adjustable transversely to the longitudinal direction and transversely to the height of the pressing element (19, 20) relative to the holder (41) into a stop position which corresponds to the stop position of the interchangeable cassette (19, 20, 30) transversely to the transport direction of the workpieces in the machine.

10. An adjusting device according to Claim 9,
**characterised in that** the pressing plate (30) has at least one stop (35) with which a counter-stop (36) on the adjusting device (21) is coordinated.

11. An adjusting device according to Claim 10,
**characterised in that** the position at least of the stop (35), preferably also of the counter-stop (36) advantageously designed as an adjusting screw, is adjustable, preferably infinitely adjustable.

12. An adjusting device according to Claim 10 or 11,
**characterised in that** the stop (35) is an angle piece provided on the pressing plate (30), on which a set screw (38) is advantageously mounted as the stop element.

13. An adjusting device according to one of Claims 9 to 12,
**characterised in that** the holder (41) is a positive-locking element, preferably a T-groove block, which engages into a receptacle (40) of the pressing plate (30), which pressing plate may advantageously be fixedly clamped by means of the holder (41).

14. An adjusting device according to one of Claims 9 to 13,
**characterised in that** the pressing plate (30) has on its underside at least one pressing element (19, 20) advantageously detachably connected thereto.

15. An adjusting device according to one of Claims 9 to 14,
**characterised in that** at least two different pressing elements (19, 20) are provided on the pressing plate (30).

16. An adjusting device according to one of Claims 9 to 15,
**characterised in that** the pressing element (19, 20) is adjustable transversely to its longitudinal direction on the pressing plate (30).

17. An adjusting device according to Claim 15 or 16,
**characterised in that** one pressing element (19) is designed so as to be rigid and is fixedly connected to the pressing plate (30).

18. An adjusting device according to one of Claims 15 to 17,
**characterised in that** the other pressing element (20) consists of at least two parts, of which one part (54) is fixedly connected to the pressing plate (30) and the other part (55) is movable relative to the one part (54).

19. A pressing element for use in a method according to one of Claims 1 to 8, comprising a strip-shaped base body (54) on which at least one pressing body (55) is adjustably mounted, which pressing body is fixable in the respective adjustment position relative to the base body (54),
**characterised in that** the base body (54) and the pressing body (15) [*sic, recte* 55] are prestressed in relation to one another by means of at least one spring (69, 70).

20. A pressing element according to Claim 19,
**characterised in that** the spring (69, 70) is arranged within the base body (54) and/or the pressing body (55).

21. A pressing element according to Claim 19 or 20,
**characterised in that** the spring (69, 70) lies in a sleeve (80) at least over a part of its length.

22. A pressing element according to one of Claims 19 to 21,
**characterised in that** the base body (54) and the pressing body (55) may be clamped in relation to one another.

23. A pressing element according to Claim 22,
**characterised in that** at least one clamping screw (83, 84) may be screwed into the base body (54), which clamping screw projects through a slotted hole (81, 82) in the pressing body (55) and the head of which is tightened in relation to the pressing body (55).

24. A pressing element according to Claim 23,
**characterised in that** the length of the slotted hole (81, 82) limits the adjustment path of the pressing body (55) in relation to the base body (54).

## Revendications

1. Procédé pour régler au moins un élément presseur (19, 20) d'une machine pour l'usinage de pièces d'oeuvre en bois, matière plastique et matériaux similaires, par rapport à la pièce d'oeuvre devant être transportée à travers la machine et être usinée dans la machine,
**caractérisé en ce que** l'élément presseur (19, 20) est réglé à l'extérieur de la machine, dans un dispositif de réglage (21), par rapport au profil que présente le côté de la pièce d'oeuvre à fabriquer, qui est dirigé vers l'élément presseur (19, 20), et l'élément presseur est mis en place dans la machine après l'opération de réglage.

2. Procédé selon la revendication 1,
**caractérisé en ce que** l'élément presseur (19, 20) est réglé par rapport à au moins un gabarit (14), un modèle ou un élément similaire, qui au moins sur son côté dirigé vers l'élément presseur (19, 20), correspond au profil que présente le côté correspondant de la pièce d'oeuvre à fabriquer.

3. Procédé selon la revendication 2,
**caractérisé en ce que** dans le dispositif de réglage (21) sont mis en place deux gabarits (14) agencés à distance l'un de l'autre et placés de manière à coïncider mutuellement.

4. Procédé selon la revendication 3,
**caractérisé en ce que** l'élément presseur (19, 20) est réglé transversalement à une droite reliant l'un à l'autre les deux gabarits (14).

5. Procédé selon l'une des revendications 1 à 4,
**caractérisé en ce que** l'élément presseur (19, 20), dans le dispositif de réglage (21), est amené, transversalement à sa direction longitudinale, dans une position de butée qui correspond à la position de butée dans la machine.

6. Procédé selon l'une des revendications 1 à 5,
**caractérisé en ce que** l'élément presseur (19, 20), à l'extérieur de la machine, est réglé dans le dispositif de réglage (21) sur au moins une plaque de presseur (30), qui après l'opération de réglage est mise en place dans la machine en commun avec l'élément presseur.

7. Procédé selon la revendication 6,
**caractérisé en ce que** dans le dispositif de réglage (21), la plaque de presseur (30) est amenée dans une position de butée qui correspond à la position de butée de la plaque de presseur (30) dans la machine.

8. Procédé selon la revendication 6 ou 7,
**caractérisé en ce que** l'élément presseur (19, 20) est réglé transversalement à sa direction longitudinale, sur la plaque de presseur (30).

9. Dispositif de réglage comprenant au moins un support (41) pour au moins une cassette interchangeable (19, 20, 30), qui présente au moins une plaque de presseur (30) sur laquelle est prévu l'élément presseur (19, 20) réglable,
**caractérisé en ce que** le dispositif de réglage est adapté à la mise en oeuvre du procédé selon l'une des revendications 1 à 8, et la cassette interchangeable (19, 20, 30) peut être réglée transversalement à la direction longitudinale et transversalement à la hauteur de l'élément presseur (19, 20), par rapport au support (41), dans une position de butée, qui correspond à la position de butée de la cassette interchangeable (19, 20, 30) transversalement à la direction de transport des pièces d'oeuvre dans la machine.

10. Dispositif de réglage selon la revendication 9,
**caractérisé en ce que** la plaque de presseur (30) présente au moins une butée (35) à laquelle est associée une butée antagoniste (36) sur le dispositif de réglage (21).

11. Dispositif de réglage selon la revendication 10,
**caractérisé en ce que** la position tout au moins de la butée (35), de préférence également de la butée antagoniste (36) avantageusement réalisée sous forme de vis de réglage, peut être réglée de préférence en continu.

12. Dispositif de réglage selon la revendication 10 ou 11,
**caractérisé en ce que** la butée (35) est une pièce en cornière prévue sur la plaque de presseur (30) et dans laquelle est avantageusement montée une vis de réglage (38) en guise d'élément de butée.

13. Dispositif de réglage selon l'une des revendications 9 à 12,
**caractérisé en ce que** le support (41) est un élément à liaison par complémentarité de formes, de préférence un patin de rainure en T, qui s'engage dans un logement de réception (40) de la plaque de presseur (30) pouvant avantageusement être serrée au moyen du support (41).

14. Dispositif de réglage selon l'une des revendications 9 à 13,
**caractérisé en ce que** la plaque de presseur (30) présente sur sa face inférieure, au moins un élément presseur (19, 20) avantageusement relié à elle de manière démontable.

15. Dispositif de réglage selon l'une des revendications 9 à 14,
**caractérisé en ce que** sur la plaque de presseur (30) sont prévus au moins deux éléments presseurs (19, 20) différents.

16. Dispositif de réglage selon l'une des revendications 9 à 15,
**caractérisé en ce que** l'élément presseur (19, 20) est réglable transversalement à sa direction longitudinale, sur la plaque de presseur (30).

17. Dispositif de réglage selon la revendication 15 ou 16,
**caractérisé en ce que** ledit un élément presseur (19) est de configuration rigide et est relié de manière fixe à la plaque de presseur (30).

18. Dispositif de réglage selon l'une des revendications 15 à 17,
**caractérisé en ce que** l'autre élément presseur (20) est constitué d'au moins deux parties, dont une partie (54) est reliée de manière fixe à la plaque de presseur (30) et l'autre partie (55) est réglable par rapport à ladite une partie (54).

19. Elément presseur destiné à être utilisé dans un procédé selon l'une des revendications 1 à 8, et comprenant un corps de base (54) en forme de barre sur lequel est monté de manière réglable au moins un corps de presseur (55) qui peut être fixé, dans la position de réglage respectivement considérée, par rapport au corps de base (54),
**caractérisé en ce que** le corps de base (54) et le corps de presseur (55) sont précontraints réciproquement l'un par rapport à l'autre par au moins un ressort (69, 70).

20. Elément presseur selon la revendication 19,
**caractérisé en ce que** le ressort (69, 70) est agencé à l'intérieur du corps de base (54) et/ou du corps de presseur (55).

21. Elément presseur selon la revendication 19 ou 20,
**caractérisé en ce que** le ressort (69, 70) se situe, au moins sur une partie de sa longueur, dans un manchon (80).

22. Elément presseur selon l'une des revendications 19 à 21,
**caractérisé en ce que** le corps de base (54) et le corps de presseur (55) peuvent être serrés réciproquement l'un contre l'autre.

23. Elément presseur selon la revendication 22,
**caractérisé en ce que** dans le corps de base (54) peut être vissée au moins une vis de serrage (83, 84), qui traverse un trou oblong (81, 82) dans le corps de presseur (55), et est serrée avec sa tête contre le corps de presseur (55).

24. Elément presseur selon la revendication 23,
**caractérisé en ce que** la longueur du trou oblong (81, 82) limite le déplacement de réglage du corps de presseur (55) par rapport au corps de base (54).
